# EUROPEAN PATENT APPLICATION

(11) **EP 2 592 829 A1**
(43) Date of publication of application: **15.05.2013**
(21) Application number: 11803266.3
(22) Date of filing: 19.05.2011
(51) Int. Cl.: H04N 7/173

(54) **IMAGE QUALITY MANAGEMENT SYSTEM**

(30) Priority: 05.07.2010 JP 2010152870
(71) Applicant: Mitsubishi Electric Corporation, Tokyo 100-8310 (JP)
(72) Inventor: ENDO, Yukinori, Tokyo 100-8310 (JP); HONDA, Hiroshi, Tokyo 100-8310 (JP)
(74) Representative: Pfenning, Meinig & Partner GbR
(86) International application number: PCT/JP2011/002799
(87) International publication number: WO 2012/004924

(57) **Abstract**

A receive terminal 5 includes a quality information determining unit 55 for comparing a value of a quality management parameter group 100D of quality information with threshold data 200B of quality control information stored in a quality control information management unit 58, and for, when the value of the quality management parameter group 100D exceeds the threshold 200B, carrying out transmission control on the quality information, and a quality management device 7 includes a quality control information management unit 73 for, when determining that a quality evaluation value does not satisfy a predetermined quality level, changing the quality control information.

## Description

### FIELD OF THE INVENTION

The present invention relates to a management system for securing stable video quality in a video communication service.

### BACKGROUND OF THE INVENTION

In recent years, with the trend toward a merger between communications and broadcasts, provision of various video communication services (IPTV, video delivery, TV meetings/TV telephones, etc.) via a wide area network including the Internet has been starting regardless of whether the wide area network is a cable one or a radio one. The securing of stable quality is an important issue when providing such a service. Conventionally, there is "QoS (Quality of Service)" as a technique for guaranteeing the communication quality of a network. Further, as a technique of further extending the concept of the guarantee of quality, defining the quality of service which an end user enjoying a video communication service feels, and guaranteeing this quality of service, "QoE (Quality of Experience)" or "end-user quality of experience" has been developed.

It can be considered that the end-user quality of experience of a video content provided in a video communication service is determined by various parts and various factors, such as quality related to the encoding state of the video content, quality related to the time of transmission of the video content via the network, and quality related to an end user environment. Therefore, it is necessary to collect and manage a quality parameter for each part. Particularly, it is necessary to monitor, estimate and manage quality parameters, which are acquired by a video receive terminal, for a quality-of-experience element in the end user environment.

In a conventional video quality management system, a video receive terminal transmits quality information (an RTP sequence number, a timestamp, etc.) to a quality management device immediately after detecting quality degradation (a packet loss, a delay, a fluctuation, or the like). As a result, the processing load imposed on the video receive terminal and the video management device in performing a quality estimation is reduced as compared with the case of calculating a quality evaluation value (QoE value) from the quality information in the video receive terminal to transmit the quality evaluation value to the quality management device and the case of transmitting the quality information periodically and constantly from all video receivers (e.g., refer to patent reference 1).

### RELATED ART DOCUMENT

### PATENT REFERENCE

Patent reference 1: Japanese Unexamined Patent Application Publication No. 2009-273013

### SUMMARY OF THE INVENTION

### PROBLEMS TO BE SOLVED BY THE INVENTION

A problem with the video quality management system disclosed in above-mentioned patent reference 1 is, however, that while when detecting quality degradation, the video quality management system certainly transmits the quality information to the quality management device, when exactly carrying out an analysis, a diagnosis, an improvement, or the like, which is caused by the handling of the end user's complaint or the assurance of a quality level, on the quality degradation for each end user, the quality management device cannot carry out a control operation of dynamically changing the threshold for the determination of quality degradation, the time intervals at which to collect quality information, and so on.

The present invention is made in order to solve the above-mentioned problem, and it is therefore an object of the present invention to provide a video quality management system which can reduce the processing load and the communication load imposed on the whole system in performing a quality estimation, and which enables a quality management device to dynamically and frequently carry out a control operation for acquiring quality information by taking into consideration the state and degree of quality degradation which individually occurs in an environment in which a video receive terminal is located.

### MEANS FOR SOLVING THE PROBLEM

In accordance with the present invention, there is provided a video quality management system in which a receive terminal for receiving a video content distributed thereto from a video delivery device and a quality management device for managing quality of the video content in the receive terminal are connected to each other via a network, wherein the receive terminal includes a receiving unit for acquiring a parameter related to a factor in quality degradation from the video content, a quality information generating unit for generating quality information according to the parameter, a first quality control information management unit for storing quality control information including a threshold for the parameter in advance, and for, when changed quality control information is inputted thereto from the quality management device, updating the quality control information stored therein to the changed quality control information and storing the quality control information updated therein, a quality information determining unit for comparing a value of the parameter of the quality information with the threshold for the parameter of the quality control information stored in the first quality control information management unit to carry out transmission control on the quality information when the value of the parameter exceeds the threshold, and a quality information transmitting unit for transmitting the quality information to the quality management device according to a transmission control command from the quality information determining unit, and the quality management device includes a quality information receiving unit for receiving the quality information transmitted from the quality information transmitting unit, a quality estimating unit for estimating a quality evaluation value from the quality information received by the quality information receiving unit, a second quality control information management unit for changing the quality control information when determining that the quality evaluation value does not satisfy a predetermined quality level, and a quality control information transmitting unit for transmitting the quality control information changed by the second quality control information management unit to the video receive terminal which is specified.

### ADVANTAGES OF THE INVENTION

Because the video quality management system in accordance with the present invention is constructed in such a way that the receive terminal includes the quality information determining unit for comparing the value of the parameter of the quality information with the threshold for the parameter of the quality control information stored in the first quality control information management unit to carry out transmission control on the quality information when the value of the parameter exceeds the threshold, and the quality management device includes the second quality control information management unit for changing the quality control information when determining that the quality evaluation value does not satisfy the predetermined quality level, the video quality management system in accordance with the present invention can dynamically and frequently carry out a control operation for acquiring the quality information from the video receive terminal. The video quality management system can also reduce the processing load and the communication load related to the quality estimation and imposed on the whole system.

### BRIEF DESCRIPTION OF THE FIGURES

[Fig. 1] Fig. 1 is a view showing the structure of a video quality management system in accordance with Embodiment 1;
[Fig. 2] Fig. 2 is a block diagram showing the structure of a video receive terminal in the video quality management system in accordance with Embodiment 1;
[Fig. 3] Fig. 3 is a block diagram showing the structure of a quality management device in the video quality management system in accordance with Embodiment 1;
[Fig. 4] Fig. 4 is a view showing an example of the structure of quality information in accordance with Embodiment 1;
[Fig. 5] Fig. 5 is a view showing an example of the structure of quality control information in accordance with Embodiment 1;
[Fig. 6] Fig. 6 is a sequence diagram showing the operation of the video quality management system in accordance with Embodiment 1;
[Fig. 7] Fig. 7 is a flow chart showing the operation of the video receive terminal in the video quality management system in accordance with Embodiment 1;
[Fig. 8] Fig. 8 is a flow chart showing the operation of the quality management device in the video quality management system in accordance with Embodiment 1;
[Fig. 9] Fig. 9 is a block diagram showing the structure of a video receive terminal in a video quality management system in accordance with Embodiment 2;
[Fig. 10] Fig. 10 is a view showing an example of the structure of quality control information in accordance with Embodiment 2;
[Fig. 11] Fig. 11 is a flow chart showing the operation of the video receive terminal in the video quality management system in accordance with Embodiment 2;
[Fig. 12] Fig. 12 is a flow chart showing the structure of a quality management device in a video quality management system in accordance with Embodiment 3; and
[Fig. 13] Fig. 13 is a flow chart showing the operation of the quality management device in the video quality management system in accordance with Embodiment 3.

### EMBODIMENTS OF THE INVENTION

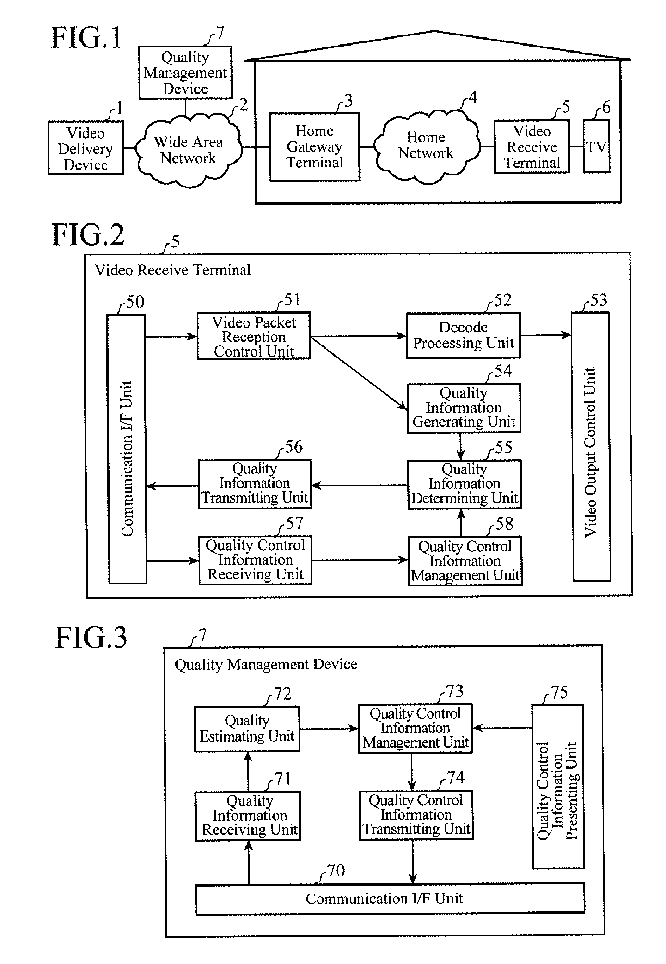

Hereafter, in order to explain this invention in greater detail, the preferred embodiments of the present invention will be described with reference to the accompanying drawings. Embodiment 1. Fig. 1 is a view showing the structure of a video quality management system in accordance with Embodiment 1. This video quality management system is comprised of a video delivery device 1, a wide area network 2, a home gateway terminal 3, a home network 4, a video receive terminal (receive terminal) 5, a TV 6, and a quality management device 7. The video delivery device 1 manages and sends out a video content, and re-encodes a video content if needed. The wide area network 2 is a communication infrastructure for providing a video communication service. The home gateway terminal 3 carries out a bidirectional packet transfer process as an entrance from the wide area network 2 to a network in a house. The home network 4 forms the network in the house. The video receive terminal 5 carries out a receiving process of receiving a video content sent thereto from the video delivery device 1. The TV 6 is the destination of output of a video content received by the video receive terminal 5. The quality management device 7 carries out collection, an estimation, and management on quality information inputted thereto from the video receive terminal 5.

Next, the details of the video receive terminal 5 and the quality management device 7 which construct this video quality management system will be explained. Fig. 2 is a block diagram showing the structure of the video receive terminal in the video quality management system in accordance with Embodiment 1. The video receive terminal 5 is comprised of a communication I/F unit 50, a video packet reception control unit (receiving unit) 51, a decode processing unit 52, a video output control unit 53, a quality information generating unit 54, a quality information determining unit 55, a quality information transmitting unit 56, a quality control information receiving unit 57, and a quality control information management unit (first quality control information management unit) 58. The communication I/F unit 50 carries out a process of establishing a connection with the home network 4. The video packet reception control unit 51 receives a video content distributed thereto from the video delivery device 1 and then carries out a reception control process on video packets, and also acquires measured source data which constructs a physical quality management parameter group related to quality degradation factors (a packet loss, an extension, a fluctuation, etc.) which occur and are detected in the end user environment. The decode processing unit 52 carries out a decoder control process on the video packets. The video output control unit 53 carries out an output control process on video data to be outputted to the TV 6.

The quality information generating unit 54 performs an arithmetic operation on the measured source data which constructs the quality management parameter group as needed to generate quality information. The quality information determining unit 55 compares the quality information with the value of quality control information, which will be mentioned below, to determine whether or not to transmit the quality information to the quality management device 7. The quality information transmitting unit 56 transmits the quality information to the quality management device 7 according to the result of the determination carried out by the quality information determining unit 55. The quality control information receiving unit 57 receives the quality control information transmitted thereto from the quality management device 7. The quality control information management unit 58 carries out a storing process, an updating process, etc. on the quality control information received by the quality control information receiving unit 57.

Fig. 3 is a block diagram showing the structure of the quality management device in the video quality management system in accordance with Embodiment 1. The quality management device 7 is comprised of a communication I/F unit 70, a quality information receiving unit 71, a quality estimating unit 72, a quality control information management unit (second quality control information management unit) 73, a quality control information transmitting unit 74, and a quality control information presenting unit 75. First, the communication I/F unit 70 carries out a connection process of establishing a connection with the wide area network 2. The quality information receiving unit 71 accepts the quality information transmitted from the video receive terminal 5. The quality estimating unit 72 estimates a quality evaluation value (QoE value) from the received quality information by using a specific algorithm. The quality control information management unit 73 stores the quality control information showing thresholds for the quality management parameter group included in the quality information, and, when the quality evaluation value does not satisfy a fixed evaluation level, changes the quality control information. The quality control information transmitting unit 74 transmits the quality control information to the quality control information receiving unit 57 of the video receive terminal 5. The quality control information presenting unit 75 is a presentation and input unit for presenting the quality control information to a user to allow the user to change the quality control information manually.

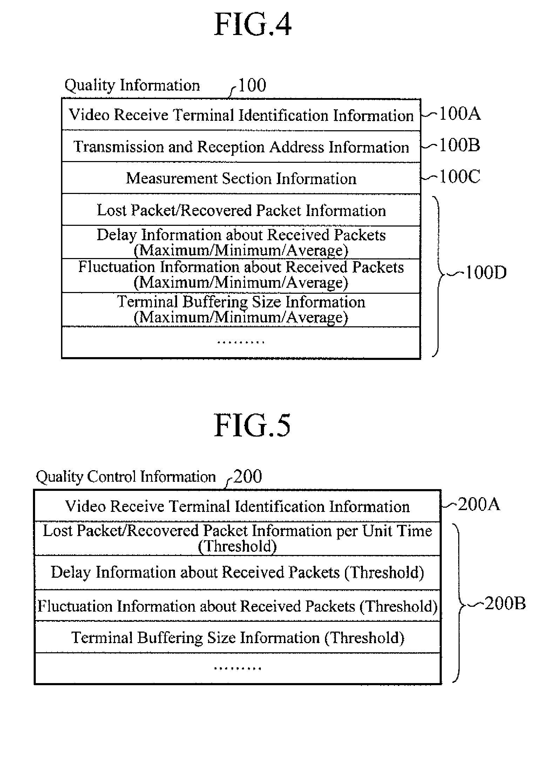

Next, the quality information and the quality control information for use in the video quality management system in accordance with Embodiment 1 will be explained with reference to Figs. 4 and 5. Fig. 4 is a view showing an example of the structure of the quality information in accordance with Embodiment 1. For example, the quality information 100 consists of video receive terminal identification information 100A, transmission and reception address information 100B, measurement section information 100C, and the quality management parameter group 100D including "delay information about received packets", "fluctuation information about the received packets", and "terminal buffering size information." The quality management parameter group 100D is comprised of the physical quality management parameters related to quality degradation factors (a packet loss, an extension, a fluctuation, etc.) which occur and are detected in the end user environment. This quality information 100 is the input information which is inputted to the quality estimating unit 72 of the quality management device 7 at the time of estimating the quality evaluation value (QoE value) according to the specific algorithm.

Fig. 5 is a view showing an example of the structure of the quality control information in accordance with Embodiment 1. For example, the quality control information 200 consists of video receive terminal identification information 200A, and threshold data 200B about the physical quality management parameter group related to quality degradation factors, the threshold data including a "threshold for lost packet/recovered packet information per unit time", a "threshold for the delay information about the received packets", a "threshold for the fluctuation information about the received packets", and a "threshold for the terminal buffering size information." This quality control information 200 shows the thresholds for the quality management parameter group 100D included in the quality information 100, and are used in order to carry out a comparison between the thresholds and the quality information generated when the video receive terminal 5 is receiving the video content to detect quality degradation.

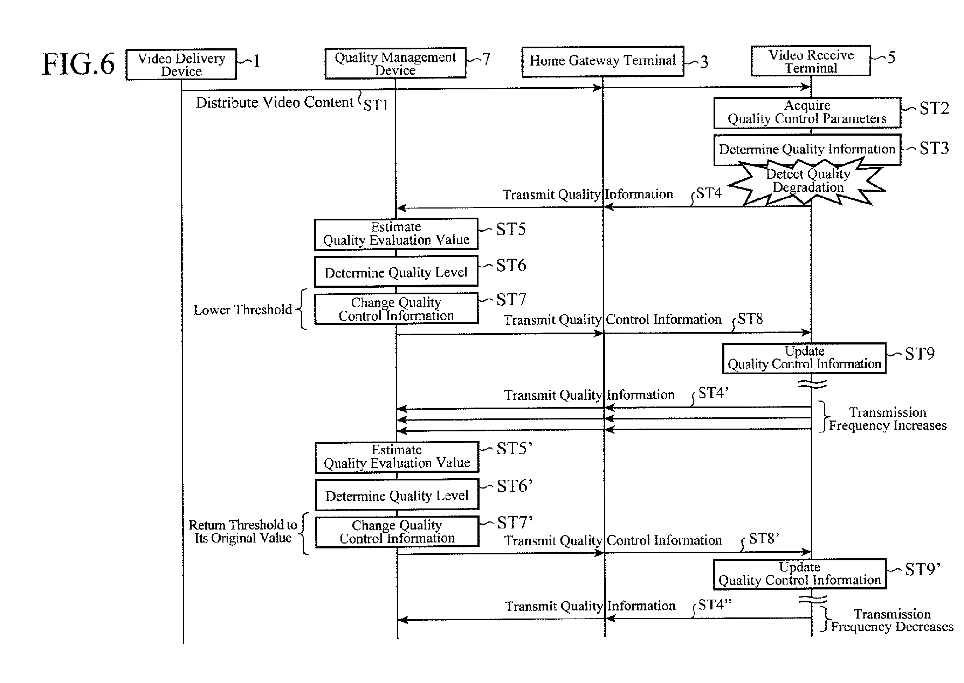

Next, the operation of the whole video quality management system in accordance with Embodiment 1 will be explained. Fig. 6 is a sequence diagram showing the operation of the video quality management system in accordance with Embodiment 1. The video delivery device 1 distributes a video content to the video receive terminal 5 (step ST1). The video receive terminal 5 receives the video content distributed thereto in step ST1, acquires various quality management parameters, such as the number of lost packets and the number of recovered packets, from the above-mentioned video content, and generates quality information by performing measurements and arithmetic operations as needed (step ST2). The video receive terminal 5 further compares the values of the quality management parameter group 100D with the threshold values of the threshold data 200B of the quality control information preset and stored in the quality control information management unit 73, respectively, to determine whether quality degradation occurs in the video content (step ST3).

When, in step ST3, determining that quality degradation does not occur in the video content, the video receive terminal returns to the process of step ST1. In contrast, when determining that quality degradation occurs in the video content, the video receive terminal transmits the quality information to the quality management device 7 via the quality information transmitting unit 56 (step ST4). The quality management device 7 estimates the quality evaluation value (QoE value) from the received quality information by using the specific algorithm (step ST5). The quality management device 7 further determines whether the estimated quality evaluation value satisfies the fixed quality level (step ST6).

When, in step ST6, determining that the estimated quality evaluation value does not satisfy the fixed quality level, the quality management device performs a changing process of decreasing the corresponding threshold value of the threshold data 200B of the quality control information (step ST7), and transmits the quality control information changed thereby to the video receive terminal 5 (step ST8). The video receive terminal 5 receives the changed quality control information transmitted thereto from the quality management device 7, and updates the quality control information stored therein to the changed quality control information and stores the quality control information updated therein (step ST9). The video quality management system thus becomes able to temporarily decrease the threshold value of the threshold data 200B of the quality control information, and can increase the frequency of transmission of the result of the comparison and determination in step ST3 of whether quality degradation occurs in the video content according to the quality information and the quality control information.

A sequence in steps ST4' to ST9' and ST4" shown in Fig. 6 is the same as that in above-mentioned steps ST4 to ST9. More specifically, because the quality control information is updated to the quality control information in which the threshold value of the threshold data 200B is decreased in step ST9 and this quality control information is stored in the video receive terminal, the frequency of transmission of the quality information from the video receive terminal 5 to the quality management device 7 is increased in step ST4'. As a result, the quality management device 7 becomes able to collect the quality information more frequently.

In contrast, when, in the processes of steps ST5' and ST6' , determining that the estimated quality evaluation value satisfies the fixed quality level, the quality management device, in step ST7', carries out a changing process of increasing the corresponding threshold value of the threshold data 200B of the quality control information, and, in step ST8', transmits the quality control information changed thereby to the video receive terminal 5. The video receive terminal 5 updates the quality control information stored therein to the changed quality control information transmitted thereto in step ST9', and stores the quality control information updated therein. As a result, the threshold values of the threshold data 200B of the quality control information are made to return to their original ones, and the frequency of transmission of the quality information transmitted from the video receive terminal 5 decreases (the transmission frequency returns to its original value) (step ST4").

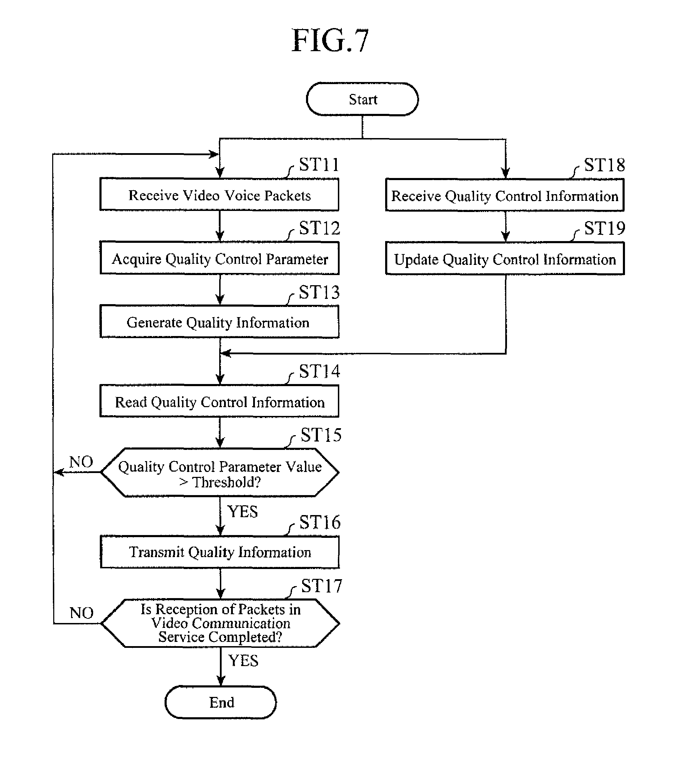

Next, the details of the operation of the video receive terminal 5 and the operation of the quality management device 7 in the sequence shown in Fig. 6 will be explained. The operation of the video receive terminal 5 will be explained first. Fig. 7 is a flow chart showing the operation of the video receive terminal in the video quality management system in accordance with Embodiment 1. When the reception of packets of a video communication service is started in the video receive terminal 5, the video packet reception control unit 51 receives video voice packets distributed thereto from the video delivery device (step ST11), acquires the quality management parameters with reference to the header information or the like of the video voice packets, and outputs the quality management parameters to the quality information generating unit 54 (step ST12). The quality information generating unit 54 generates quality information as shown in the data table of Fig. 4 according to the quality management parameters inputted thereto in step ST12, and outputs the quality information to the quality information determining unit 55 (step ST13).

On the other hand, when the video receive terminal 5, in step ST11, starts the reception of the packets in the video communication service, the quality control information receiving unit 57 receives the quality control information transmitted from the quality management device 7, and outputs the quality control information to the quality control information management unit 58 (step ST18). The quality control information management unit 58 updates the quality control information to the quality control information which the quality control information management unit newly acquires in step ST18 (step ST19), and stores the quality control information updated therein.

The quality information determining unit 55 reads the quality control information stored in the quality control information management unit 58 (step ST14), and compares the threshold values of the threshold data 200B of the quality control information with the values of the quality management parameter group 100D of the quality information inputted thereto in step ST12, respectively, to determine whether or not each of the values of the quality management parameter group 100D is larger than the corresponding threshold value of the threshold data 200B (step ST15). When, in step ST15, determining that each value of the quality management parameter group 100D is equal to or smaller than the corresponding threshold value of the threshold data 200B, the quality information determining unit returns to the process of step ST11 and repeats the above-mentioned processing. In contrast, when, in step ST15, determining that one value of the quality management parameter group 100D is larger than the corresponding threshold value of the threshold data 200B, the quality information determining unit determines that quality degradation occurs in the video content and controls the quality information transmitting unit 56 to cause this quality information transmitting unit to transmit the quality information to the quality management device 7, so that the quality information transmitting unit 56 transmits the quality information to the quality management device 7 (step ST16). The video packet reception control unit 51 determines whether or not the reception of the packets in the video communication service is completed (step ST17), and then ends the processing when, in step ST17, determining that the reception of the packets in the video communication service is completed. In contrast, when determining that the reception of the packets in the video communication service is not completed, the video packet reception control unit returns to the process of step ST11 and repeats the above-mentioned processing.

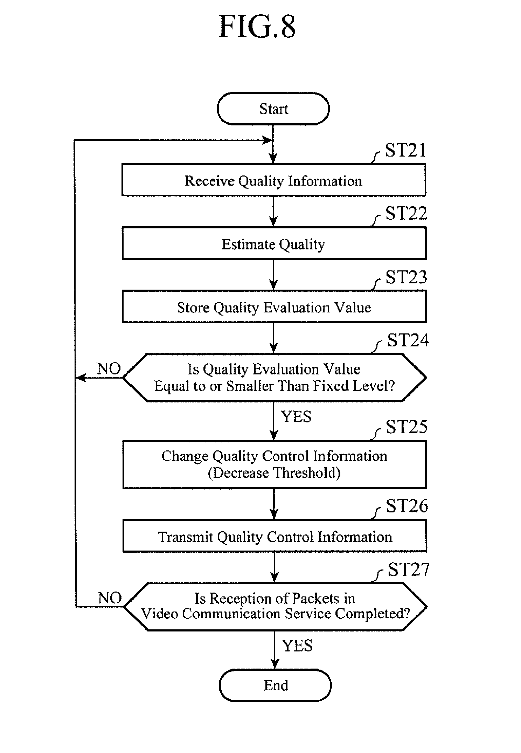

Next, the operation of the quality management device 7 will be explained. Fig. 8 is a flow chart showing the operation of the quality management device in the video quality management system in accordance with Embodiment 1. The quality information receiving unit 71 receives the quality information inputted thereto from the video receive terminal 5 via the communication I/F unit 70, and outputs the quality information to the quality estimating unit 72 (step ST21). The quality estimating unit 72 estimates the quality evaluation value (QoE value) from the quality information inputted to the quality information receiving unit in step ST21 by using the specific algorithm (step ST22), and stores the quality evaluation value estimated thereby in the quality control information management unit 73 (step ST23).

The quality control information management unit 73 determines whether or not the quality evaluation value stored therein is equal to or smaller than the fixed quality level (for example, refers to a quality level management table) (step ST24). When, in step ST24, determining that the quality evaluation value is larger than the fixed quality level, the quality control information management unit returns to the process of step ST21. In contrast, when, in step ST24, determining that the quality evaluation value is equal to or smaller than the fixed quality level, the quality control information management unit decreases the corresponding threshold value, which is stored therein, of the threshold data 200B of the quality control information (step ST25).

The quality control information transmitting unit 74 specifies the video receive terminal 5 which is the transmission destination, and transmits the quality control information changed in step ST25 to the video receive terminal (step ST26). The quality information receiving unit 71 determines whether or not the management of the quality of the video communication service is completed (step ST27), and ends the processing when, in step ST27, determining that the management of the quality of the video communication service is completed. In contrast, when determining that the management of the quality of the video communication service is not completed, the quality information receiving unit returns to the process of step ST21 and repeats the above-mentioned processing.

Although the structure of changing and transmitting the quality control information (decreasing one threshold value of the threshold data 200B) in connection with the quality level determination using the estimated quality evaluation value (QoE value) in step ST24 in the flow chart of Fig. 8 is shown, the present embodiment is not limited to this structure, and the video quality management system in accordance with this embodiment can be alternatively constructed in such a way as to transmit the quality control information in which the threshold value of the threshold data 200B is changed manually via the quality control information presenting unit 75 at a completely independent time.

As mentioned above, because the video quality management system in accordance with this Embodiment 1 is constructed in such a way as to define the threshold data 200B of the quality management parameter group as the quality control information and transmit this quality control information from the quality management device 7 to the video receive terminal 5, the video quality management system can collect the quality information from the video receive terminal 5 flexibly and frequently.

Further, because the video quality management system in accordance with this Embodiment 1 is constructed in such a way that the video receive terminal 5 determines whether or not to transmit the quality information after carrying out a comparative evaluation between the threshold data 200B of the quality control information and the quality management parameter group 100D, the video quality management system can reduce the processing load and the communication load related to the quality estimation and imposed on the whole system.

### Embodiment 2.

In above-mentioned Embodiment 1, the structure of carrying out a transmission control process on the quality information by delivering the quality control information in which the threshold data 200B of the quality management parameter group are defined is shown. In contrast, in this Embodiment 2, a structure of defining transmission time intervals or a transmission time at which quality information is transmitted and including the transmission time intervals or the transmission time in quality control information, and delivering this quality control information is shown.

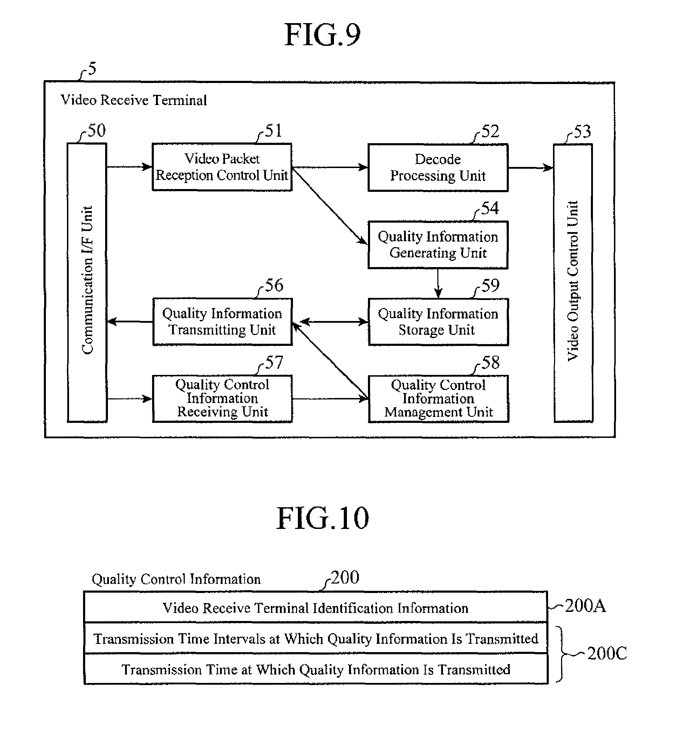

Fig. 9 is a block diagram showing the structure of a video receive terminal in a video quality management system in accordance with Embodiment 2 of the present invention. In this Embodiment 2, a quality information storage unit 59 is disposed instead of the quality information determining unit 55 of the video receive terminal 5 in accordance with Embodiment 1. The same structural components as those of the video receive terminal 5 in accordance with Embodiment 1 are designated by the same reference numerals as those used in Fig. 2, and the explanation of the components will be omitted or simplified. The quality information storage unit 59 stores quality information generated by a quality information generating unit 54 in a storage area thereof for a fixed time period. A quality control information management unit 58 sets a transmission timer according to a transmission time included in the quality control information stored therein, and, when the current time reaches the transmission time, output a control command to read and output the quality information to a quality information transmitting unit 56. The quality information transmitting unit 56 reads the quality information from the storage area of the quality information storage unit 59 and outputs the quality information to a quality management device 7 according to the control command inputted thereto from the quality control information management unit 58.

Fig. 10 is an explanatory drawing showing an example of the structure of the quality control information in accordance with Embodiment 2. In accordance with this Embodiment 2, the video receive terminal 5 uses the quality control information in order to specify a time when transmitting the quality information to the quality management device. As shown in Fig. 10, the quality control information 200 is comprised of video receive terminal identification information 200A, and a time parameter group 200C of the quality information which is comprised of the "transmission time intervals at which the quality information is transmitted", the "transmission time at which the quality information is transmitted", or the like.

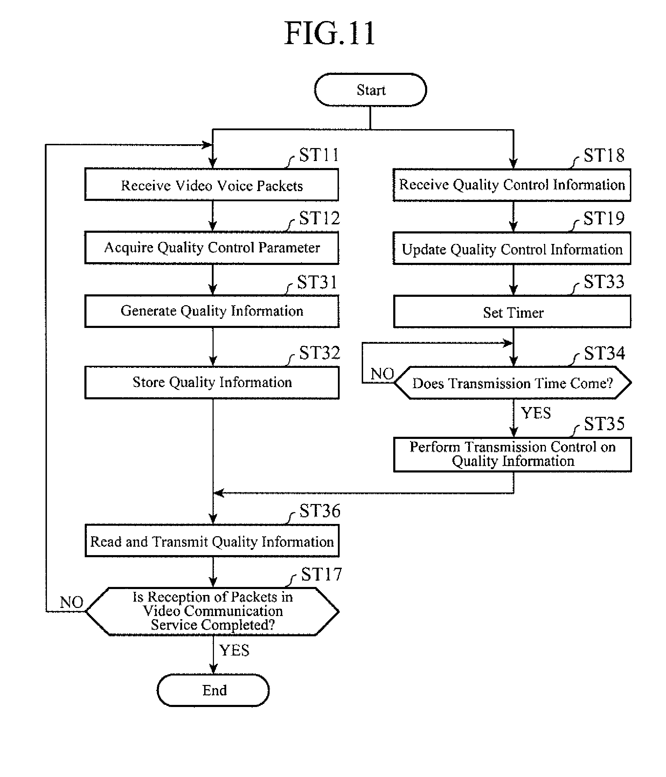

Fig. 11 is a flow chart showing the operation of the video receive terminal in the video quality management system in accordance with Embodiment 2, and an operation of transmitting the quality information will be explained with reference to this flow chart. The same steps as those of the operation performed by the video receive terminal 5 in accordance with Embodiment 1 are designated by the same reference numerals as those used in Fig. 7, and the explanation of the steps will be simplified hereafter. The quality information generating unit 54 generates quality information in a data table as shown by Fig. 4 according to quality management parameters inputted thereto in step ST12, and outputs the quality information to the quality information storage unit 59 (step ST31). The quality information storage unit 59 stores the quality information inputted thereto in step ST31 in the storage area thereof (step ST32).

On the other hand, a quality control information receiving unit 57 receives the quality control information transmitted thereto from the quality management device 7, and outputs the quality control information to the quality control information management unit 58 (step ST18). The quality control information management unit 58 updates the quality control information stored therein to the quality control information which the quality control information management unit newly acquires in step ST18, and stores the quality control information updated therein (step ST19). In addition, the quality control information management unit sets the transmission timer with reference to the transmission time information included in the quality control information (step ST33), and determines whether the current time reaches a transmission time (step ST34).

When, in step ST34, determining that the current time reaches any transmission time, the quality control information management unit returns to the determining process of step ST34. In contrast, when, in step ST34, determining that the current time reaches a transmission time, the quality control information management unit reads the quality information stored in the quality information storage unit 59 for the quality information transmitting unit 56, and outputs a control command to transmit the quality information to the quality management device 7 (step ST35). The quality information transmitting unit 56 reads the quality information from the quality information storage unit 59, and transmits the quality information to the quality management device 7 (step ST36).

A video packet reception control unit 51 determines whether or not the reception of packets in the video communication service is completed (step ST17), and ends the processing when, in step ST17, determining that the reception of packets in the video communication service is completed. In contrast, when determining that the reception of packets in the video communication service is not completed, the video packet reception control unit returns to the process of step ST11 and repeats the above-mentioned processing.

When, in step ST25 of Fig. 8 shown in Embodiment 1, determining that the quality evaluation value is equal to or smaller than a fixed quality level, the quality management device 7 in accordance with Embodiment 2 operates to decrease the value of the time parameter group 200C of the quality control information data stored therein. In the other steps, the quality management device in accordance with this embodiment operates in the same way as that in accordance with Embodiment 1. The information which a quality control information presenting unit 75 presents to the user differs from that shown in Embodiment 1. In accordance with this Embodiment 2, the transmission time intervals or transmission time at which the quality information is transmitted is presented, as the quality control information, to the user by the quality control information presenting unit 75, and the user is allowed to change this quality control information manually.

As mentioned above, because the video quality management system in accordance with this Embodiment 2 is constructed in such a way as to define the transmission time intervals or transmission time at which the quality information is transmitted and including the transmission time intervals or transmission time in the quality control information, and, when the current time reaches either one of the transmission time intervals or the transmission time, transmit the quality information from the video receive terminal 5 to the quality management device 7, the video quality management system can control the time at which to collect the quality information from the video receive terminal 5. As a result, the video quality management system can make the processing load and the communication load imposed on the quality management device 7 flat with respect to time.

Although in this Embodiment 2 the structure of specifying a transmission time as the quality control information is shown, the present embodiment is not limited to this example. For example, as the transmission control condition in the quality control information, a condition that the quality information is transmitted every when one broadcast program or one video content is ended can be set up. A specification of a transmission time based on an arbitrary condition which is not direct time information can be alternatively made. The video receive terminal 5 stores the quality information which the video receive terminal has generated until the current time reaches the transmission time in the storage area of the quality information storage unit 59, and collectively transmits the pieces of quality information stored therein to the quality management device. In this case, the arbitrary transmission time is provided for the quality control information presenting unit 75, and the user is allowed to manually change this arbitrary transmission time.

Further, in the case of collectively transmitting the pieces of quality information from the video receive terminal 5 to the quality management device 7, the video receive terminal 5 can hold a public key in advance, and the quality information transmitting unit 56 can be constructed in such a way as to transmit the pieces of quality information to the quality management device after file-compressing and encrypting these pieces of quality information. A quality information receiving unit 71 of the quality management device 7 decompresses and decrypts the received pieces of quality information.

### Embodiment 3.

In Embodiment 3, a structure in which a video delivery device determines to change quality control information according to content encoding information, which the video delivery device transmits to a quality management device 7 in advance, and delivers the changed quality control information to carry out transmission control of quality information will be shown. The structure in accordance with this Embodiment 3 can be applied to above-mentioned Embodiments 1 and 2.

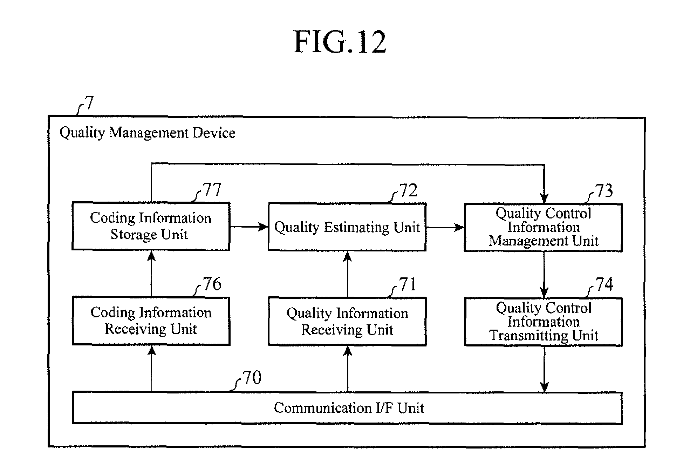

Fig. 12 is a block diagram showing the structure of the quality management device in a video quality management system in accordance with Embodiment 3 of the present invention. In the quality management device in accordance with this Embodiment 3, an encoding information receiving unit 76 and an encoding information storage unit 77 are disposed instead of the quality control information presenting unit 75 of the quality management device 7 in accordance with Embodiment 1. The same structural components as those of the quality management device 7 in accordance with Embodiment 1 are designated by the same reference numerals as those used in Fig. 3, and the explanation of the components will be omitted or simplified. The encoding information receiving unit 76 receives encoding information transmitted thereto via a wide area network 2 from a video delivery device 1 shown in Fig. 1. For example, the encoding information is comprised an encoding method, a frame rate, a video image format, etc. The encoding information storage unit 77 stores the encoding information which the encoding information receiving unit 76 receives, and provides the encoding information for a quality estimating unit 72 and a quality control information management unit 73.

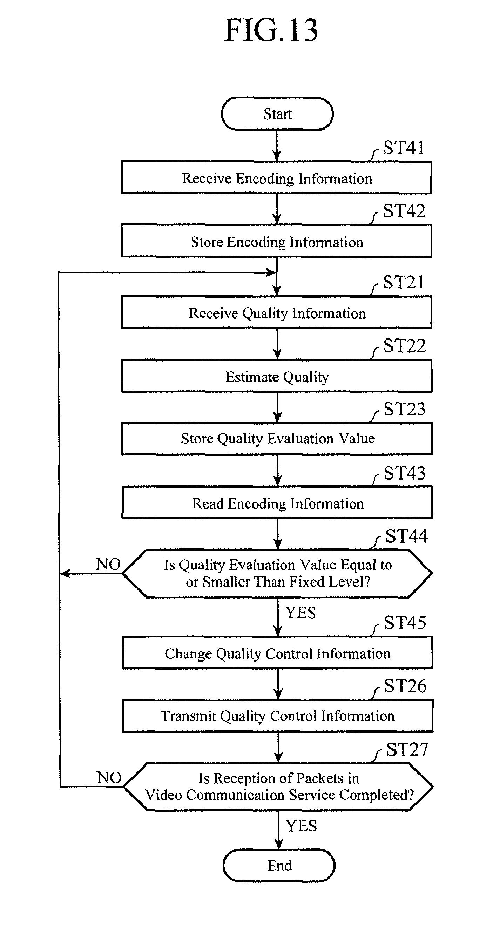

Fig. 13 is a flow chart showing the operation of the quality management device in the video quality management system in accordance with Embodiment 3, and an operation of transmitting the quality control information will be explained with reference to this flow chart. The same steps as those of the operation performed by the quality management device 7 in accordance with Embodiment 1 are designated by the same reference numerals as those used in Fig. 8, and the explanation of the steps will be simplified hereafter. First, before starting control of the quality of a video communication service, the encoding information receiving unit 76 of the quality management device 7 receives the encoding information transmitted thereto from the video delivery device 1 (step ST41), and stores this encoding information in the encoding information storage unit 77 (step ST42). After that, when the control of the quality of the video communication service is started, a quality information receiving unit 71 receives the quality information inputted thereto from the video receive terminal 5, and outputs the quality information to the quality estimating unit 72 (step ST21).

The quality estimating unit 72 estimates a quality evaluation value (QoE value) from the quality information inputted thereto in step ST21 by using a specific algorithm (step ST22), and stores the quality evaluation value estimated thereby in the quality control information management unit 73 (step ST23). The quality control information management unit 73 reads the encoding information from the encoding information storage unit 77 (step ST43), and determines whether or not the quality evaluation value stored in step ST23 is equal to or smaller than a fixed quality level in consideration of the encoding information (for example, refers to a quality level management table) (step ST44).

When, in step ST44, determining that the quality evaluation value is larger than the fixed quality level, the quality control information management unit returns to the process of step ST21. In contrast, when, in step ST44, determining that the quality evaluation value is equal to or smaller than the fixed quality level, the quality control information management unit decreases the value of threshold data 200B of the quality control information stored therein (step ST45). Concretely, the quality control information management unit changes the value of the threshold data 200B of the quality control information to a value which is determined in consideration of the encoding information. The quality control information transmitting unit 74 specifies the video receive terminal 5 which is the transmission destination, and transmits the quality control information changed in step ST45 to the video receive terminal (step ST26). The quality information receiving unit 71 determines whether or not the control of the quality of the video communication service is completed (step ST27), and ends the processing when, in step ST27, determining that the control of the quality of the video communication service is completed. In contrast, when determining that the control of the quality of the video communication service is not completed, the quality information receiving unit returns to the process of step ST21 and repeats the above-mentioned processing.

As mentioned above, because the video quality management system in accordance with this Embodiment 3 is constructed in such a way that the quality management device 7 takes into consideration the encoding information when estimating the quality evaluation value (QoE value) and when changing the value of the threshold data 200B of the quality control information, the video quality management system can carry out a control operation of collecting the quality information from the video receive terminal 5 more appropriately according to the encoding information of the content distributed to the video receive terminal.

### INDUSTRIAL APPLICABILITY

As mentioned above, because the video quality management system in accordance with the present invention can dynamically and frequently carry out a control operation for acquiring quality information from a video receive terminal, and can reduce the processing load and the communication load related to the quality estimation and imposed on the whole system, the video quality management system is suitable for use as a management system for securing stable video quality in a video communication service, and so on.

### EXPLANATIONS OF REFERENCE NUMERALS

1 video delivery device, 2 wide area network, 3 home gateway terminal, 4 home network, 5 video receive terminal, 6 TV, 7 quality management device, 50 and 70 communication I/F unit, 51 video packet reception control unit, 52 decode processing unit, 53 video output control unit, 54 quality information generating unit, 55 quality information determining unit, 56 quality information transmitting unit, 57 quality control information receiving unit, 58 quality control information management unit, 59 quality information storage unit, 71 quality information receiving unit, 72 quality estimating unit, 73 quality control information management unit, 74 quality control information transmitting unit, 75 quality control information presenting unit, 76 encoding information receiving unit, 77 encoding information storage unit.

## Claims

1. A video quality management system in which a receive terminal for receiving a video content distributed thereto from a video delivery device and a quality management device for managing quality of the video content in said receive terminal are connected to each other via a network, wherein
said receive terminal includes a receiving unit for acquiring a parameter related to a factor in quality degradation from said video content, a quality information generating unit for generating quality information according to said parameter, a first quality control information management unit for storing quality control information including a threshold for said parameter in advance, and for, when changed quality control information is inputted thereto from said quality management device, updating said quality control information stored therein to said changed quality control information and storing said quality control information updated therein, a quality information determining unit for comparing a value of the parameter of said quality information with the threshold for the parameter of the quality control information stored in said first quality control information management unit to carry out transmission control on said quality information when the value of said parameter exceeds said threshold, and a quality information transmitting unit for transmitting said quality information to said quality management device according to a transmission control command from said quality information determining unit, and wherein
said quality management device includes a quality information receiving unit for receiving the quality information transmitted from said quality information transmitting unit, a quality estimating unit for estimating a quality evaluation value from the quality information received by said quality information receiving unit, a second quality control information management unit for changing said quality control information when determining that said quality evaluation value does not satisfy a predetermined quality level, and a quality control information transmitting unit for transmitting the quality control information changed by said second quality control information management unit to the video receive terminal which is specified.

2. The video quality management system according to claim 1, wherein said quality management device includes a quality control information presenting unit for presenting the quality control information to a user, and accepting an operation of changing a setting of said quality control information, and said second quality control information management unit stores the quality control information to which a setting change is made by said quality control information presenting unit.

3. A video quality management system in which a receive terminal for receiving a video content distributed thereto from a video delivery device and a quality management device for managing quality of the video content in said receive terminal are connected to each other via a network, wherein
said receive terminal includes a receiving unit for acquiring a parameter related to a factor in quality degradation from said video content, a quality information generating unit for generating quality information according to said parameter, a quality information storage unit for storing said quality information in a storage area, a first quality control information management unit for storing quality control information having transmission time information of said quality information in advance, and for, when changed quality control information is inputted from said quality management device, updating said quality control information stored therein to said changed quality control information and storing said quality control information updated therein, and for carrying out transmission control on said quality information when a current time reaches a transmission time which said transmission time information has, and a quality information transmitting unit for transmitting the quality information stored in said quality information storage unit to said quality management device according to a transmission control command from said first quality control information management unit, and wherein
said quality management device includes a quality information receiving unit for receiving the quality information transmitted from said quality information transmitting unit, a quality estimating unit for estimating a quality evaluation value from the quality information received by said quality information receiving unit, a second quality control information management unit for changing said quality control information when determining that said quality evaluation value does not satisfy a predetermined quality level, and a quality control information transmitting unit for transmitting the quality control information changed by said second quality control information management unit to the video receive terminal which is specified.

4. The video quality management system according to claim 3, wherein said transmission time information is transmission time intervals or a transmission time at which the quality information is transmitted.

5. The video quality management system according to claim 4, wherein said quality management device includes a quality control information presenting unit for presenting the quality control information to a user to accept an operation of changing a setting of the transmission time intervals or the transmission time at which the quality information is transmitted, and said second quality control information management unit stores the quality control information to which a setting change is made by said quality information presenting unit.

6. The video quality management system according to claim 3, wherein said transmission time information is an arbitrary specified condition.

7. The video quality management system according to claim 1, wherein said quality management device includes an encoding information receiving unit for receiving content encoding information distributed thereto from the video delivery device, and an encoding information storage unit for storing the content encoding information received by said encoding information receiving unit, and said first quality control information management unit determines whether the quality evaluation value satisfies a predetermined quality level in consideration of said content encoding information.

8. The video quality management system according to claim 3, wherein said quality management device includes an encoding information receiving unit for receiving content encoding information distributed thereto from the video delivery device, and an encoding information storage unit for storing the content encoding information received by said encoding information receiving unit, and said first quality control information management unit determines whether the quality evaluation value satisfies a predetermined quality level in consideration of said content encoding information.

9. The video quality management system according to claim 1, wherein the quality information transmitting unit of said receive terminal compresses and encrypts the quality information to transmit, and the quality information receiving unit of said quality management device decompresses and decrypts the quality information received thereby.

10. The video quality management system according to claim 3, wherein the quality information transmitting unit of said receive terminal compresses and encrypts the quality information to transmit, and the quality information receiving unit of said quality management device decompresses and decrypts the quality information received thereby.
